# EUROPÄISCHE PATENTANMELDUNG

(11) **EP 2 662 702 A1**
(43) Veröffentlichungstag der Anmeldung: **13.11.2013**
(21) Anmeldenummer: 12167003.8
(22) Anmeldetag: 07.05.2012
(51) Int. Cl.: G01S 7/497, G01S 17/10, G01S 17/36, G01B 9/02, G01S 17/66

(54) **Lasertracker mit Interferometer und Absolutdistanzmesseinheit sowie Kalibrierverfahren für einen Lasertracker**

(71) Anmelder: Leica Geosystems AG, 9435 Heerbrugg (CH)
(72) Erfinder: Lüthi, Thomas, 5000 Aarau (CH); Böckem, Burkhard, 5200 Brugg (CH)
(74) Vertreter: Gyaja, Christoph Benjamin

(57) **Zusammenfassung**

Lasertracker (90) zur fortlaufenden Verfolgung eines reflektierenden Ziels (97) und zur Entfernungsbestimmung zu dem Ziel (97) mit einer Strahllenkeinheit (95) zur Emission einer Messstrahlung (96) und zum Empfang von zumindest einem Teil der am Ziel (97) reflektierten Messstrahlung (96). Der Lasertracker (90) weist zudem ein Interferometer zur Bestimmung einer Entfernungsänderung zum Ziel (97) mit einer Laserdiode zur Erzeugung der Messstrahlung (96) so, dass die Messstrahlung (96) kohärent monomodig vorliegt, und eine Absolutdistanzmesseinheit zur Bestimmung eines Messdistanzwerts für eine Distanz zum Ziel (97) auf. Eine Steuerungs- und Auswerteeinheit ist derart ausgebildet, dass ein Bestimmen einer Interferometerwellenlänge der Messstrahlung (96) dadurch erfolgt, dass definierte Probemessungen unter einem Variieren der Distanz zum Ziel (97) durchgeführt werden, wobei die Probemessungen bei zumindest zwei unterschiedlichen Distanzen zum Ziel (97) erfolgen, die Messstrahlung (96) fortwährend auf das Ziel (97) ausgerichtet ist und unter Stabilhalten der Interferometerwellenlänge ein Bestimmen einer Interferometerausgangsgrösse für jede der zumindest zwei unterschiedlichen Distanzen zum Ziel (97) erfolgt. Zudem werden zumindest zwei Messdistanzwerte für die zwei unterschiedlichen Distanzen zum Ziel (97) durch die Absolutdistanzmesseinheit bereitgestellt und die Interferometerwellenlänge der Messstrahlung (96) wird mindestens anhand von den zumindest zwei Messdistanzwerten und den jeweils bestimmten Interferometerausgangsgrössen bestimmt.

## Beschreibung

Die Erfindung betrifft einen Lasertracker mit einem Interferometer nach dem Oberbegriff des Anspruchs 1 und ein Kalibrierverfahren für und mit einem Lasertracker nach dem Oberbegriff des Anspruchs 12.

Für Messungen im Bereich der optischen Messtechnik werden häufig wellenlängenstabilisierte Gaslaser (HeNe-Laser) als Lichtquelle eingesetzt. Diese weisen im Wesentlichen eine hohe Wellenlängenstabilität (je nach Stabilisationsmethode) und eine grosse Kohärenzlänge von einigen hundert Metern auf. Dadurch sind diese Strahlquellen insbesondere geeignet für die Verwendung als Frequenz- und Wellenlängennormal und ermöglichen für interferometrische Messsysteme hohe Messreichweiten. Typische Anwendungen umfassen z.B. lineare Interferometer, Wellenlängennormal, Vibrometer und die Verwendung als Interferometerlichtquelle in einem Lasertracker.

Nachteilig an der Verwendung von Gaslaserquellen (HeNe-Laserlichtquellen) ist im Hinblick auf eine allgemein angestrebte Miniaturisierung, insbesondere von Lasertrackern, jedoch deren die Lichtleistung bestimmende Dimensionierung. Die Leistung der Lichtquelle hängt dabei signifikant von der Länge der Laserröhre ab, d.h. je länger die Röhre desto grösser die erreichbare Emissionsleistung. Zudem zeigt eine derartige Laserquelle gewöhnlich eine relativ grosse Leistungsdissipation. Einen weiteren Nachteil stellt die für den Betrieb benötigte Hochspannungsversorgung dar. Beispielsweise muss für die Zündung des Lasers eine Spannung von ca. 7'000V und während des Betriebs eine Spannung von ca. 1'500V bereitgestellt werden, wodurch bei der Verwendung solcher Lichtquellen spezielle Komponenten (z.B. Hochspannungsnetzteil und Abschirmung) eingesetzt und Sicherheitsmassnahmen getroffen werden müssen. Auch die Empfindlichkeit gegenüber Magnetfeldern (z.B. erzeugt durch interne Motoren oder externe Schweisstrafos) und die begrenzte Lebensdauer der Röhren (typischerweise ca. 15'000 Betriebsstunden) gestalten den Einsatz von HeNe-Lasern nachteilig - beispielsweise da die Lichtquellen oft kostspielig in den Systemen ersetzt werden müssen.

Alternative Lichtquellen sind in diesem Zusammenhang z.B. Laserdioden. Diese sind an sich kompakt, kostengünstig und haben einen geringen Leistungsverbrauch. Herkömmliche Fabry-Pérot Laserdioden sind jedoch nicht als Interferometerlichtquelle geeignet, da diese eine verhältnismässig kleine Kohärenzlänge aufweisen und nicht (longitudinal) singlemodig emittieren (d.h. mit mehrere Wellenlängen emittieren).

Als Strahlquellen können jedoch z.B.
● Distributed Feedback Laser (DFB) (mit einem periodisch strukturierten aktiven Medium, z.B. Gitter),
● Distributed Bragg Reflector Laser (DBR) (mit einem optischen Gitter ausserhalb des aktiven Mediums aber auf einem gemeinsamen Chip angeordnet),
● Fiber Bragg grating laser (FBG) (im Wesentlichen gemäss einem DFB-Laser, jedoch mit einem Gitter in einer externen Faser),
● External Cavity Diode Laser (ECDL) (Stabilisierung der Laserdiode mittels einer externen hochstabilen Kavität z.B. mit einem holografischen Gitter),
● Diode pumped solid state lasers (DPSS),
● Discrete mode lasers (DMD) und/oder
● Microchip Laser
eingesetzt werden. Die Strahlquellen sind dabei derart ausgebildet, dass der emittierte Laserstrahl hinsichtlich der Wellenlänge singlemodig mit einer Kohärenzlänge in der Grössenordnung von mehreren 10m (bzw. einer Linienbreite < 1MHz) ist.

Für die Verwendung solcher Laserdioden als Interferometerlichtquelle oder als Wellenlängennormal ist zusätzlich ein gewisses Stabil-Halten einer bestimmten Wellenlänge erforderlich. Dies kann bekanntermassen z.B. spektroskopisch mittels einer Absorptionslinie eines Absorptionsmediums erfolgen (z.B. unter Verwendung einer Gaszelle). Nachteilig an der Verwendung einer Absorptionszelle zur Stabilisierung wiederum ist der damit verbundene Platzbedarf.

Prinzipiell könnte alternativ einfach irgendeine Wellenlänge eingestellt werden und diese in der Produktion mit einem externen Wellenlängenmessgerät identifiziert werden. Werden die dazu eingestellten Diodenparameter wie z.B. Temperatur und Strom gespeichert und beim nächsten Einschalten wiederhergestellt, so sollte man wieder bei der ursprünglichen Wellenlänge landen. Die Umsetzung dieser Stabilisationsmöglichkeit gestaltet sich jedoch z.B. aufgrund von Alterungseffekten der Diode und einer dadurch verursachten Wellenlängenänderung schwierig und bleibt mit Unsicherheiten hinsichtlich der emittierten Wellenlänge behaftet.

Die Anforderungen an ein solches Messgerät sind analog auf Messvorrichtungen übertragbar, welche eine Interferometereinheit zur Bestimmung von Entfernungsänderungen aufweisen. Dabei können Messvorrichtungen, die für eine fortlaufende Verfolgung eines Zielpunkts und eine koordinative Positionsbestimmung dieses Punkts ausgebildet sind, allgemein unter dem Begriff Lasertracker zusammengefasst werden. Ein Zielpunkt kann dabei durch eine retro-reflektierende Einheit (z.B. Würfelprisma) repräsentiert sein, die mit einem optischen Messstrahl der Messvorrichtung, insbesondere einem Laserstrahl, angezielt wird. Der Laserstrahl wird parallel zurück zur Messvorrichtung reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von dem Messgerät zum Zielpunkt, z.B. mittels Laufzeit- oder Phasendifferenzmessung ermittelt.

Lasertracker nach dem Stand der Technik können zusätzlich mit einer optischen Bilderfassungseinheit mit einem zweidimensionalen, lichtempfindlichen Array, z.B. einer CCD- oder CID-Kamera (CCD = charge coupled device; CID = charge injection device) oder einer auf einem CMOS-Array basierenden Kamera, oder mit einem Pixelarraysensor und mit einer Bildverarbeitungseinheit ausgeführt sein. Der Lasertracker und die Kamera sind dabei insbesondere derart aufeinander montiert, dass ihre Positionen relativ zueinander nicht veränderbar sind. Die Kamera ist beispielsweise zusammen mit dem Lasertracker um dessen im Wesentlichen senkrechte Achse drehbar, jedoch unabhängig vom Lasertracker auf und ab schwenkbar und somit insbesondere von der Optik des Laserstrahls getrennt angeordnet. Insbesondere kann die Kamera über eine Fischaugen-Optik verfügen und somit ein Schwenken der Kamera aufgrund eines sehr grossen Bilderfassungsbereichs der Kamera vermieden oder zumindest eingeschränkt nötig sein. Weiters kann die Kamera - z.B. in Abhängigkeit der jeweiligen Anwendung - nur um eine Achse schwenkbar ausgeführt sein. In alternativen Ausführungen kann die Kamera in integrierter Bauweise mit der Laseroptik zusammen in einem gemeinsamen Gehäuse verbaut sein.

Mit dem Erfassen und Auswerten eines Bildes - mittels Bilderfassungs- und Bildverarbeitungseinheit - eines so genannten Messhilfsinstruments mit Markierungen, deren relative Lagen zueinander bekannt sind, kann auf eine Orientierung des Instruments und eines an dem Messhilfsinstrument angeordneten Objekts (z.B. eine Sonde) im Raum geschlossen werden. Zusammen mit der bestimmten räumlichen Position des Zielpunkts kann ferner die Position und Orientierung des Objekts im Raum absolut und/oder relativ zum Lasertracker präzise bestimmt werden.

Derartige Messhilfsinstrumente können durch so genannte Tastwerkzeuge, die mit ihrem Kontaktpunkt auf einem Punkt des Zielobjektes positioniert werden, verkörpert sein. Das Tastwerkzeug weist Markierungen, z.B. Lichtpunkte, und einen Reflektor auf, der einen Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind. Das Messhilfsinstrument kann in dem Fachmann bekannter Weise auch ein beispielsweise von Hand gehaltener, zur Distanzmessung ausgerüsteter Scanner für berührungslose Oberflächenvermessungen sein, wobei Richtung und Position des für die Distanzmessung verwendeten Scanner-Messstrahles relativ zu den Lichtpunkten und Reflektoren, die auf dem Scanner angeordnet sind, genau bekannt sind. Ein derartiger Scanner ist beispielsweise in der EP 0 553 266 beschrieben.

Ausserdem wird in modernen Trackersystemen - zunehmend standardisiert - auf einem Sensor (PSD) eine Ablage des empfangenen Messstrahls von einer Nullposition ermittelt. Als PSD ist in diesem Zusammenhang ein örtlich analog arbeitender Flächensensor zu verstehen, mit welchem ein Schwerpunkt einer Lichtverteilung auf der Sensorfläche bestimmt werden kann. Das Ausgangssignal des Sensors wird dabei vermittels einer oder mehrerer photosensitiver Flächen erzeugt und hängt von der jeweiligen Position des Licht-Schwerpunkts ab. Mittels einer nachgeschalteten oder integrierten Elektronik kann das Ausgangssignal ausgewertet werden und der Schwerpunkt ermittelt werden. Die Ermittlung der Position des Schwerpunkts des auftreffenden Lichtpunkts kann dabei sehr schnell (Mikrosekundenbereich) und mit einer Nanometer-Auflösung erfolgen.

Mittels dieser PSD kann eine Ablage des Auftreffpunkts des erfassten Strahls von einem Servokontroll-Nullpunkt bestimmt und auf Basis der Ablage ein Nachführen des Laserstahls auf das Ziel erfolgen. Zu diesem Zweck und zum Erreichen einer hohen Genauigkeit ist das Sichtfeld dieser PSD vergleichsweise klein, d.h. korrespondierend zum Strahldurchmesser des Messlaserstrahls, gewählt. Eine Erfassung mit der PSD erfolgt koaxial zur Messachse, sodass die Erfassungsrichtung der PSD der Messrichtung entspricht.

Zur Entfernungsmessung weisen Lasertracker des Standes der Technik zumindest einen Distanzmesser auf, wobei dieser z.B. als Interferometer ausgebildet sein kann. Da solche Entfernungsmesseinheiten nur relative Distanzänderungen messen können, werden in heutigen Lasertrackern zusätzlich zu Interferometern so genannte Absolutdistanzmesser verbaut. Beispielsweise ist eine derartige Kombination von Messmitteln zur Entfernungsbestimmung durch das Produkt AT901 der Leica Geosystems AG bekannt.

Die in diesem Zusammenhang für die Distanzmessung eingesetzten Interferometer können - aufgrund der grossen Kohärenzlänge und der damit ermöglichten Messreichweite - als Lichtquellen HeNe-Gaslaser oder aber oben erwähnte Laserdioden, welche genannte Vorteile hinsichtlich der Leistungsaufnahme und des Platzbedarfs bieten, aufweisen. Eine Kombination eines Absolutdistanzmessers und eines Interferometers zur Entfernungsbestimmung mit einem HeNe-Laser ist beispielsweise aus der WO 2007/079600 A1 bekannt. Eine Verwendung einer Laserdiode als Interferometer-Laserlichtquelle ist beispielsweise in der europäischen Patentanmeldung Nr. 11187614.0 beschrieben.

Für eine verlässliche Distanzmessung bzw. eine Messung der Distanzänderung bei einer im Hinblick auf die genannten Vorteile anzustrebende Verwendung einer Laserdiode muss dabei die Wellenlänge der verwendeten Messstrahlung stabil gehalten werden und genau (insbesondere bis auf wenige Picometer) bekannt sein. Ein reproduzierendes Erzeugen einer solchen bestimmten und dadurch bekannten Wellenlänge vermittels einer definierten Ansteuerung der Diode kann in diesem Zusammenhang nicht mit absoluter Verlässlichkeit erfolgen.

Es ist daher eine Aufgabe der vorliegenden Erfindung einen verbesserten Lasertracker mit einem Interferometer bzw. ein entsprechendes Verfahren bereitzustellen, wobei Mittel zur Erzeugung einer Laserstrahlung für das Interferometer in ihrer Gesamtheit kompakt ausgebildet sind und eine geräteseitige Bestimmung einer Emissionswellenlänge der emittierten Laserstrahlung verlässlich und eindeutig durchführbar ist.

Eine spezielle Aufgabe der Erfindung ist es einen verbesserten Lasertracker mit Mitteln zur Stabilisierung der Emissionswellenlänge und einer abstimmbaren Laserdiode bereitzustellen, wobei eine aktuelle Emissionswellenlänge der Laserdiode eindeutig bestimmbar ist.

Eine weitere spezielle Aufgabe der vorliegenden Erfindung ist es einen verbesserten Lasertracker bereitzustellen, wobei die durch eine Laserdiode emittierte Strahlung für ein Interferometer des Trackers hinsichtlich der Wellenlänge abstimmbar und die Wellenlänge genau bestimmbar ist.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Weitere, alternative Aspekte die Bestimmung einer Wellenlänge einer zur Interferometrie vorgesehen Diode in einem Messgerät, z.B. Lasertracker, betreffend sind in der europäischen Patentanmeldung Nr. EP 12166955.0 beschrieben. Die Erfindung betrifft einen Lasertracker zur fortlaufenden Verfolgung eines reflektierenden Ziels und zur Entfernungsbestimmung zu dem Ziel. Der Lasertracker weist dabei eine eine Stehachse definierenden Basis und eine Strahllenkeinheit zur Emission einer Messstrahlung und zum Empfang von zumindest einem Teil der am Ziel reflektierten Messstrahlung auf, wobei die Strahllenkeinheit um die Stehachse und eine im Wesentlichen orthogonal zur Stehachse stehende Neigungsachse relativ zur Basis motorisiert schwenkbar ist. Zudem sind ein Interferometer zur Bestimmung einer Entfernungsänderung zum Ziel mittels Interferometrie mit einer als Interferometer-Laserstrahlquelle ausgebildeten abstimmbaren Laserdiode zur derartigen Erzeugung der Messstrahlung für das Interferometer, dass die Messstrahlung kohärent longitudinal monomodig vorliegt, eine Absolutdistanzmesseinheit zur Bestimmung eines Messdistanzwerts für eine Distanz zum Ziel und Winkelmessfunktionalität zur Bestimmung einer Ausrichtung der Strahllenkeinheit relativ zur Basis vorgesehen.

Erfindungsgemäss ist eine zudem vorgesehene Steuerungs- und Auswerteeinheit derart ausgebildet, dass bei einer Ausführung eines Kalibriermodus ein Bestimmen einer Interferometerwellenlänge der Messstrahlung dadurch erfolgt, dass definierte Probemessungen unter einem Variieren der Distanz zum Ziel durchgeführt werden, wobei die Probemessungen bei zumindest zwei unterschiedlichen Distanzen zum Ziel erfolgen, die Messstrahlung fortwährend auf das Ziel ausgerichtet ist und unter Stabilhalten der Interferometerwellenlänge ein Bestimmen einer Interferometerausgangsgrösse mit dem Interferometer für jede der zumindest zwei unterschiedlichen Distanzen zum Ziel erfolgt. Dabei werden zumindest zwei Messdistanzwerte für die zumindest zwei unterschiedlichen Distanzen zum Ziel durch jeweils ein Distanzbestimmen mittels der Absolutdistanzmesseinheit bereitgestellt. Die Interferometerwellenlänge der Messstrahlung wird mindestens anhand von den zumindest zwei Messdistanzwerten und den jeweils bestimmten Interferometerausgangsgrössen bestimmt.

Gemäss der Erfindung kann durch die als Laserdiode vorgesehene Strahlquelle ein kompaktes Interferometer für einen Lasertracker realisiert werden, wobei die Lichtquelle (Laserdiode mit grosser Kohärenzlänge) nicht zusätzlich auf eine Gaszelle stabilisiert wird, sondern durch eine stabile (rauscharme) und genaue Ansteuerung der Diode stabil gehalten wird. Zur Bestimmung der Wellenlänge der Lichtquelle wird der in einem Lasertracker zusätzlich zum Interferometer vorhandenen Absolutdistanzmesser, insbesondere unter aktiver Mitwirkung eines Benutzers, eingesetzt.

Bei gleichzeitigen Messungen von Interferometer und Absolutdistanzmesser wird ein Retroreflektor trackend (d.h. Interferometerstrahl ist dauernd auf das Ziel gerichtet) verschoben, wobei aus dabei gemessenen Distanzunterschieden der beiden Distanzmesser, und insbesondere aus den beiden Grobwellenlängen und unter Kenntnis der atmosphärischen Daten Druck, Feuchte und Temperatur, die Wellenlänge der lediglich über die Betriebsparameter der Laserdiode stabilisierten Interferometerstrahlung auf wenige Picometer (pm) bestimmt werden kann.

Die so bestimmte Wellenlänge wird für weitere interferometrische Messungen des Lasertrackers verwendet. Zudem kann durch weitere fortlaufende, analoge Messungen von Absolutdistanzmesser (ADM) und Interferometer (IFM) im normalen Messbetrieb des Lasertrackers die Interferometerwellenlänge weiterhin bestimmt und gegebenenfalls kontinuierlich aktualisiert werden. Dadurch kann eine fortlaufende Kalibrierung des Trackers erfolgen (Selbstkalibrierung).

Zudem erlaubt der Einsatz eines Interferometers mit nicht zusätzlich auf eine Absorptionslinie stabilisierter Laserdiode hoher Kohärenzlänge als Lichtquelle (gemäss der Erfindung) auch eine AIFM-Messung (= kombinierte Messungen mit ADM und IFM) auf bewegte Ziele. Das AIFM (= ADM + IFM) ermöglicht Messungen auf bewegte Ziele ("lock on the fly") durch Kenntnis und Berücksichtigung der bereits ohne bekannte Absolutdistanz durch das Interferometer gemessenen relativen Distanzänderungen während einer ADM-Messung. Hierfür reicht bereits die durch die erfindungsgemässe hochstabile Ansteuerung der Laserdiode bereitgestellte Wellenlängenstabilität während einer einzelnen ADM-Messung sowie eine nur sehr grobe Kenntnis der IFM- Wellenlänge aus. Für jedoch eine Ausführung von Messungen mit hohen Messraten, die dem typischen Einsatz von Lasertrackern entsprechen, muss die Wellenlänge genau bekannt sein. Hierfür wird das erfindungsgemässe Kalibrieren ausgeführt.

Als Laserdiode sind im Rahmen der vorliegenden Erfindung zumindest
● Distributed Feedback Laser (DFB) (mit einem periodisch strukturierten aktiven Medium, z.B. Gitter),
● Distributed Bragg Reflector Laser (DBR) (mit einem optischen Gitter ausserhalb des aktiven Mediums aber auf einem gemeinsamen Chip angeordnet),
● Fiber Bragg grating laser (FBG) (im Wesentlichen gemäss einem DFB-Laser, jedoch mit einem Gitter in einer externen Faser),
● External Cavity Diode Laser (ECDL) (Stabilisierung der Laserdiode mittels einer externen hochstabilen Kavität z.B. mit einem holografischen Gitter),
● Diode pumped solid state lasers (DPSS),
● Discrete mode lasers (DMD),
● Microchip Laser, und/oder
● Diodenlaser
zu verstehen. Alternative Laserdioden-Ausführungen werden jedoch explizit nicht ausgeschlossen. Die Dioden können dabei derart ausgebildet sein, dass der emittierte Laserstrahl mit einer Kohärenzlänge in der Grössenordnung von mehreren 10m (bzw. einer Linienbreite <1MHz) erzeugt wird. In diesem Zusammenhang kann zur Erzeugung der Messstrahlung eine wellenlängenselektive Komponente vorgesehen sein, insbesondere ein optisches Gitter.

Insbesondere kann erfindungsgemäss die Interferometerwellenlänge der Messstrahlung mittels Variation von zumindest einem Betriebsparameter variierbar sein und die Steuerungs- und Auswerteeinheit derart ausgebildet sein, dass für die Laserdiode der zumindest eine Betriebsparameter derart präzise einstellbar ist, dass durch das präzise Einstellen des zumindest einen Betriebsparameters die Interferometerwellenlänge so setzbar ist, dass diese grob bekannt ist.

Durch eine solche genaue und zuverlässige Ansteuerung der Diode kann zum einen die Interferometerwellenlänge so genau - z.B. durch Setzten eines Diodenstroms und einer Diodentemperatur - eingestellt werden, dass die Wellenlänge grob bekannt ist, und zum anderen diese Wellenlänge stabil gehalten werden. Die grobe Kenntnis der Wellenlänge kann zusätzlich für die (präzise) Berechnung bzw. Bestimmung der Interferometerwellenlänge herangezogen werden.

Erfindungsgemäss kann somit bei Ausführung des Kalibriermodus das Bestimmen der Interferometerwellenlänge der Messstrahlung zusätzlich in Abhängigkeit von der grob bekannten Interferometerwellenlänge erfolgen.

In einer speziellen Ausführungsform ist die Steuerungs- und Auswerteeinheit erfindungsgemäss derart ausgebildet, dass bei einem In-Betrieb-Nehmen des Lasertrackers der zumindest eine Betriebsparameter für die Laserdiode derart gesetzt wird, dass ein vorheriger Betriebszustand für die Laserdiode im Wesentlichen reproduziert wird, insbesondere ein letzter vorheriger Betriebszustand im Wesentlichen reproduziert wird.

Das Startverfahren für einen erfindungsgemässen Lasertracker ist in einer entsprechenden Ausführungsform somit derart konzipiert, dass vorerst die beim letzten Ausschalten des Systems gespeicherten Betriebsparameter (für die Diode) wiederhergestellt werden und dadurch im Wesentlichen die Wellenlänge des vorangehenden Betriebszyklus erzeugt wird. Anschliessend können der Retroreflektor trackend verschoben und aus den gemessenen Distanzunterschieden der beiden Distanzmesser (und den beiden Grobwellenlängen und unter Kenntnis der atmosphärischen Daten Druck, Feuchte und Temperatur) die Wellenlänge für das Interferometer bestimmt werden.

In diesem Zusammenhang kann zudem eine durch Alterung bedingte Veränderung der Einstellparameter der Diode durch Abspeicherung der jeweils letzten Werte abgefangen werden.

Hinsichtlich der Art der Betriebsparameter kann erfindungsgemäss eine variierbare Temperatur der Laserdiode den zumindest einen Betriebsparameter verkörpern und/oder ein an der Laserdiode anliegende variierbarer elektrischer Strom den zumindest einen Betriebsparameter verkörpern. Somit kann die Interferometerwellenlänge der Diode durch ein Verändern von Strom und/oder Temperatur der Diode verändert werden.

Ein weiterer Aspekt der Erfindung betrifft die Ausbildung der Steuerungs- und Auswerteeinheit. Dies kann erfindungsgemäss derart ausgebildet sein, dass während einer Ausführung eines Messmodus ein Regeln der Interferometerwellenlänge vermittels des zumindest einen Betriebsparameters derart erfolgt, dass die Interferometerwellenlänge stabil bleibt.

Dabei kann insbesondere gesteuert durch die Steuerungs- und Auswerteeinheit während der Ausführung des Messmodus der Kalibriermodus fortlaufend ausgeführt werden, insbesondere wobei die im Rahmen des Kalibriermodus bestimmte Interferometerwellenlänge der Messstrahlung zur Ausführung des Messmodus gespeichert wird.

Somit kann z.B. mittels weiterer ADM-Messungen die Interferometerwellenlänge fortlaufend kontrolliert, bestimmt und aktualisiert werden.

Hinsichtlich der Ausgestaltung der Laserdiode gemäss der Erfindung kann die Laserdiode derart ausgebildet sein, dass die Interferometerwellenlänge mit einer Kohärenzlänge von mindestens 10m erzeugbar ist.

Ferner sind gemäss einer bestimmten Ausführungsform der Erfindung eine Interferometer-Empfangseinheit des Interferometers zum Empfang der Messstrahlung und eine Empfängereinheit der Absolutdistanzmesseinheit unterschiedlich, d.h. die Absolutdistanzmesseinheit weist eine Empfängereinheit auf, die strukturell von der Empfängereinheit des Interferometers getrennt ist bzw. getrennt zu betrachten ist. Im Speziellen kann dabei dem Interferometer und der Absolutdistanzmesseinheit eine Strahlquelle gemeinsam sein.

Ein weiterer Aspekt der Erfindung betrifft einen erfindungsgemässen Lasertracker mit einem Absorptionsmedium. Der Lasertracker weist in diesem Zusammenhang ein innerhalb eines Wellenlängenbereichs eine Vielzahl von bekannten Absorptionslinien definierendes Absorptionsmedium, einen Speicher mit einem innerhalb des Wellenlängenbereichs für jeweilige Absorptionswellenlängen jeweils eine Absorptionsstärke angebenden gespeicherten Linienatlas für das Absorptionsmedium und einen Detektor zur Bestimmung der Absorptionsstärke auf. Eine derartige Ausgestaltung des Tracker ist zur Stabilisierung der Interferometerwellenlänge in Abhängigkeit von einer jeweils aktuell bestimmten Absorptionsstärke vorgesehen.

Insbesondere kann erfindungsgemäss bei Ausführung des Kalibriermodus ein Ermitteln einer Orientierung im Linienatlas basierend auf den bereitgestellten Messdistanzwerten, auf den Interferometerausgangsgrössen, auf der Vielzahl von bekannten Absorptionslinien und auf der bestimmten Absorptionsstärke erfolgen, insbesondere wobei die Interferometerwellenlänge in Abhängigkeit von der ermittelten Orientierung bestimmt wird.

Ferner kann der Lasertracker erfindungsgemäss eine ein Absorptionsmedium aufweisende Absorptionszelle aufweisen, insbesondere wobei Jodgas das Absorptionsmedium bildet und die Interferometerwellenlänge zwischen 500nm und 650nm liegt, insbesondere zwischen 630nm und 635nm.

Die Erfindung betrifft ausserdem ein Kalibrierverfahren für und mit einem Lasertracker mit einem Interferometer zum Bestimmen einer Entfernungsänderung zu einem Ziel mittels Interferometrie mit einer als Interferometer-Laserstrahlquelle ausgebildeten abstimmbaren Laserdiode zum derartigen Erzeugen einer Messstrahlung für das Interferometer, dass die Messstrahlung kohärent longitudinal monomodig vorliegt, und mit einer Absolutdistanzmesseinheit zur Bestimmung eines Messdistanzwerts für eine Distanz zum Ziel.

Im Rahmen des Kalibrierverfahrens erfolgt ein Bestimmen einer Interferometerwellenlänge der Messstrahlung dadurch, dass definierte Probemessungen unter einem Variieren der Distanz zum Ziel durchgeführt werden, wobei die Probemessungen bei zumindest zwei unterschiedlichen Distanzen zum Ziel erfolgen und die Messstrahlung fortwährend auf das Ziel ausgerichtet ist und unter Stabilhalten der Interferometerwellenlänge ein Bestimmen einer Interferometerausgangsgrösse mit dem Interferometer für jede der zumindest zwei unterschiedlichen Distanzen zum Ziel erfolgt. Zudem werden zumindest zwei Messdistanzwerte für die zumindest zwei unterschiedlichen Distanzen zum Ziel durch jeweils ein Distanzbestimmen mittels der Absolutdistanzmesseinheit bereitgestellt. Die Interferometerwellenlänge der Messstrahlung wird mindestens anhand von den zumindest zwei Messdistanzwerten und den jeweils bestimmten Interferometerausgangsgrössen bestimmt.

Gemäss einer spezielleren Ausführungsform erfolgt ein Ermitteln einer Orientierung in einem für jeweilige Absorptionswellenlängen jeweils eine Absorptionsstärke angebenden Linienatlas in Abhängigkeit von den bereitgestellten Messdistanzwerten, von den Interferometerausgangsgrössen und von einer gemessenen Absorptionsstärke, insbesondere wobei die Interferometerwellenlänge in Abhängigkeit von der ermittelten Orientierung bestimmt wird.

Im Rahmen der Erfindung kann ausserdem das Variieren der Distanz zum Ziel durch ein manuelles Versetzen des Ziels durch einen Benutzer erfolgen.

Die Erfindung betrifft zudem ein Computerprogrammprodukt, das auf einem maschinenlesbaren Träger gespeichert ist, zur Steuerung des Durchführens von Probemessungen, und zur Ausführung des Bestimmens der Interferometerwellenlänge eines erfindungsgemässen Kalibrierverfahren, insbesondere wenn das Computerprogrammprodukt auf einer Steuerungs- und Auswerteeinheit eines erfindungsgemässen Lasertrackers ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: eine Ausführungsform eines optischen Aufbaus eines erfindungsgemässen Lasertrackers mit einer als Interferometer-Strahlquelle ausgeführten Laserdiode;
- Fig.2: ein erfindungsgemässes Kalibrieren mit einem Lasertracker;
- Fig.3: eine Ausführungsform für einen erfindungsgemässen Lasertracker und einen erfindungsgemässen Kalibriervorgang mit dem Tracker; und
- Fig.4: eine weitere Ausführungsform eines optischen Aufbaus eines erfindungsgemässen Lasertrackers gemäss Figur 1 mit zusätzlich einer Absorptionszelle.

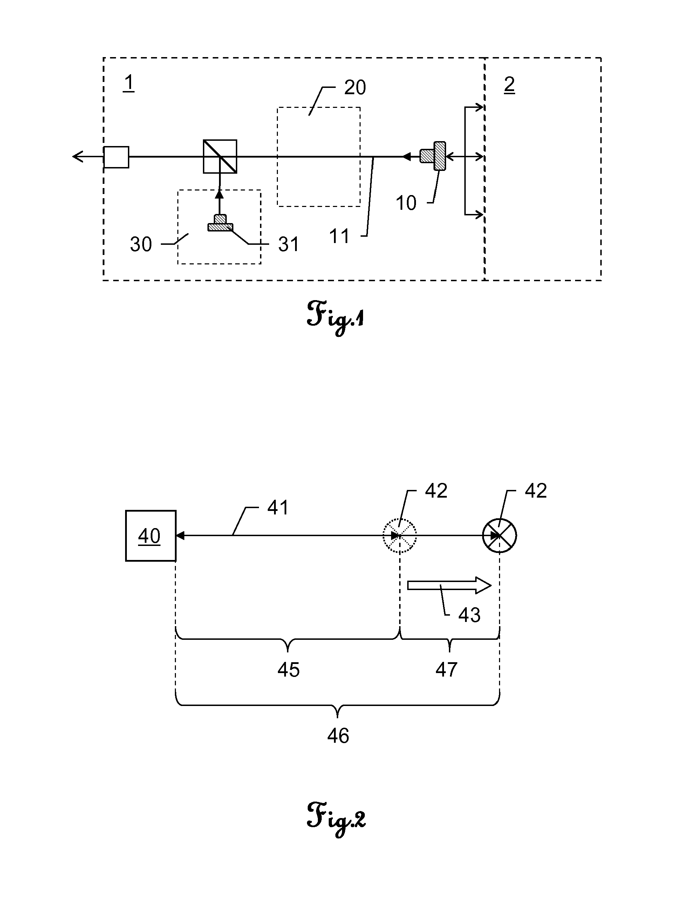

Figur 1 zeigt eine Ausführungsform eines optischen Aufbaus 1 eines erfindungsgemässen Lasertrackers mit einer als Interferometer-Strahlquelle ausgeführten Laserdiode 10, einer Interferometereinheit 20 und einer Absolutdistanzmesseinheit 30, welche eine weitere Strahlquelle 31, insbesondere ausgeführt als Laserdiode oder SLED, aufweist. Mit der Laserdiode wird eine Messstrahlung 11 für das Interferometer 20 zur Bestimmung von Entfernungsänderungen zu einem Objekt bereitgestellt, wobei mit der Absolutdistanzmesseinheit 30 absolute Entfernungen zu Objekten bestimmt werden können. Ausserdem ist eine Steuerungs- und Auswerteeinheit 2 zur Steuerung der Laserdiode 10 vermittels zumindest einer Temperatur-und/oder Stromregulierung gezeigt. Ferner können damit durch die Interferometereinheit 20 und die Absolutdistanzmesseinheit 30 erzeugte Messdaten (z.B. bestimmte Entfernungen oder Interferometerausgangsgrössen) verarbeitet werden.

Das Abstimmen der Interferometerwellenlänge bzw. Emissionswellenlänge der Laserdiode 10 erfolgt dabei durch eine Regelung des an der Diode 10 anliegenden elektrischen Stroms und/oder der Temperatur der Diode 10 mittels der Steuerungs- und Auswerteeinheit 2. Durch die genaue Einstellung der für die Ansteuerung der Laserdiode 10 vorgesehenen Betriebsparameter kann die Wellenlänge der an der Diode 10 emittierten Strahlung derart gesetzt werden, dass die bei interferometrischen Messungen herangezogene Interferometerwellenlänge zumindest grob bekannt ist.

Generell wird von der Laserdiode 10 Laserlicht mit einen modehop-frei abstimmbaren (tuneable) Wellenlängenbereich bereitgestellt. Das erzeugte Laserlicht weist zudem eine grosse Kohärenzlänge auf, insbesondere mindestens 10m, vorzugsweise mindestens 50m.

Zur Identifikation der Interferometerwellenlänge stellt die Steuerungs- und Auswerteeinheit 2 eine erfindungsgemässe Kalibrierfunktionalität bereit. Für eine bei Ausführung dieser Funktionalität erfolgende Kalibrierung werden zunächst definierte Probemessungen ausgeführt. Die Probemessungen werden bei einer Variation einer Entfernung zu einem Ziel bzw. Objekt ausgeführt, wobei als Messergebnis mittels der Interferometereinheit 20 für jede Probemessung jeweils eine Interferometerausgangsgrösse bestimmt wird und ferner die Entfernung zum Objekt mittels der Absolutdistanzmesseinheit 30 gemessen wird.

Durch ein zusammenschauendes Berücksichtigen von jeweiligen Interferometerausgangsgrössen und zugehörigen Entfernungen kann aus mindestens zwei solchen Probemessungen die Interferometerwellenlänge abgeleitet werden. Dabei kann der mittels der Absolutdistanzmesseinheit 30 bestimmte Distanzunterschied zum Ziel verglichen werden mit den für diese Distanzänderung festgestellten Interferometersignalen. Diese Interferometersignale werden beispielsweise generiert durch eine fortlaufende Detektion von abwechselnder konstruktiver und destruktiver Interferenz, wobei eine Anzahl von Übergängen zwischen konstruktiver und destruktiver Interferenz (Interferometer Counts) gezählt und verfolgt und daraus eine Entfernungsänderung abgeleitet werden kann.

Ausserdem können bei der Bestimmung der Interferometerwellenlänge zusätzlich die durch die exakte Feinansteuerung der Laserdiode 10 grob bekannte Wellenlänge für das Interferometer und eine zweite Wellenlänge für eine für die Absolutdistanzmessung erzeugte zweite Laserstrahlung berücksichtigt werden. Zusätzlich können in diesem Zusammenhang klimatische Informationen, wie z.B. Luftdruck und/oder Lufttemperatur, in die Bestimmung der Interferometerwellenlänge einfliessen und dabei berücksichtigt werden

Weiters ist die Messstrahlung 11 für die Bestimmung der Interferometerwellenlänge während des Variierens der Entfernung zum Ziel fortlaufend auf das Ziel gerichtet. Dadurch wird ermöglicht fortlaufende Interferometersignale zu empfangen und daraus einen interferometrischen Wert für die Distanzänderung abzuleiten. Zusammen mit einem zweiten (Referenz-) Wert für die Entfernungsänderung zum Ziel, z.B. aus den Messungen der Absolutdistanzmesseinheit 30 für die jeweiligen unterschiedlichen Entfernungen, kann mittels Berechnung, insbesondere durch Ausgleichsrechnung (z.B. "best-fit"), die Interferometerwellenlänge bestimmt werden.

Figur 2 zeigt schematisch ein erfindungsgemässes Kalibrieren mit einem Lasertracker 40. Der Lasertracker 40 kann dabei beispielsweise einen erfindungsgemässen optischen Aufbau 1 mit Steuerungs- und Auswerteeinheit 2, wobei die Steuerungs- und Auswerteeinheit 2 einen Kalibriermodus bereitstellt, gemäss Figur 1 aufweisen.

Ausserdem ist ein Ziel 42, z.B. ein Retro-Reflektor, gezeigt, welches aus einer ersten Position in eine zweite Position verschoben wird. Diese Positionsveränderung ist durch den Pfeil 43 angezeigt. Ein Messlaserstrahl 41 des Lasertrackers 40 ist auf das Ziel 42 gerichtet und wird von diesem - zumindest teilweise - retro-reflektiert und am Tracker 40 empfangen. Erzeugt wird dieser Strahl 41 als mode-hop freier Laserstrahl mit grosser Kohärenzlänge, insbesondere von mindestens 10m, vorzugsweise von mindestens 50m, durch eine entsprechend spezifizierte Laserdiode. Mit der ersten Positionierung des Ziels 42 ist eine erste Entfernung 45 des Ziels 42 zum Lasertracker 40 definiert. Durch das angezeigte Verschieben 43 des Ziels 42 zur zweiten Position wird zudem eine zweite Entfernung 46 zwischen Lasertracker 40 und Ziel 42 definiert. Dabei entsteht ein Distanzunterschied 47 zwischen erster und zweiter Zielpositionierung.

Für die Ausführung der Kalibrierung bleibt der Messlaserstrahl 41 des Trackers 40 während des Verschiebevorgangs fortlaufend auf das Ziel 42 gerichtet, damit die durch das Verschieben 43 erzeugte Distanzänderung durch den Tracker 40 verfolgt werden kann. Hierfür werden bei erfolgender Positionsänderung des Ziels 42 fortlaufend Signale, die durch ein Interferometer im Tracker 40 erzeugt werden, ausgelesen und durch diese interferometrischen Messungen hochpräzise ein den Distanzunterschied 47 repräsentierender Wert festgestellt. Hierfür nutzt das Interferometer die Messlaserstrahlung 41. Beispielsweise kann eine Anzahl von abwechselnder konstruktiver und destruktiver Interferenz erfasst werden, wobei die Anzahl jeweiligen Übergängen zwischen konstruktiver und destruktiver Interferenz (sog. Interferometer-Counts) entsprechen kann.

Ausserdem werden zur Kalibrierung die beiden Distanzen 45,46 zum Ziel 42 mittels der Absolutdistanzmesseinheit bestimmt. Die dadurch ermittelten Distanzwerte werden erfindungsgemäss den jeweiligen mit dem Interferometer für diese Distanzen 45,46 erzeugten Werten zugeordnet. Dadurch können nun für die zumindest zwei Distanzen 45,46 jeweilige Wertepaare gebildet werden. In Abhängigkeit von diesen Wertepaaren kann die Interferometerwellenlänge für die Messstrahlung 41 präzise, insbesondere bis auf wenige Picometer, bestimmt werden.

Im Speziellen kann für jede Position des Ziels 42 der mit dem Absolutdistanzmesser bestimmte Distanzwert herangezogen werden und dieser mit dem zugehörigen Interferometerwert verknüpft werden. Zusätzlich kann eine Differenz 47 zwischen den Distanzen 45,46 berechnet werden und parallel dazu ein Unterschied für die Interferometerwerte abgeleitet werden, wobei dieser Interferometer-Differenzwert z.B. wiederum durch eine Anzahl von Interferometer-Counts verkörpert werden kann. Aus diesen Differenzen (Distanz und Interferometerausgangsgrösse) kann nun auf die Wellenlänge geschlossen werden.

Insbesondere kann für diese Berechnung zusätzlich die grob bekannte Wellenlänge der Absolutdistanzmesseinheit und der Messstrahlung berücksichtig werden und dadurch die Genauigkeit der Berechnung gesteigert bzw. ein Fehler für die Berechnung reduziert werden. Zudem können auch aktuelle meteorologische Daten bei der Berechnung Berücksichtigung finden.

Auf Basis des so kalibrierten Interferometers können in Folge hochgenaue Distanzmessungen und Messungen von Distanzänderungen durchgeführt werden. Insbesondere werden hierfür jeweils Informationen verwendet, die sowohl von der Absolutdistanzmesseinheit als auch von dem Interferometer bereitgestellt werden.

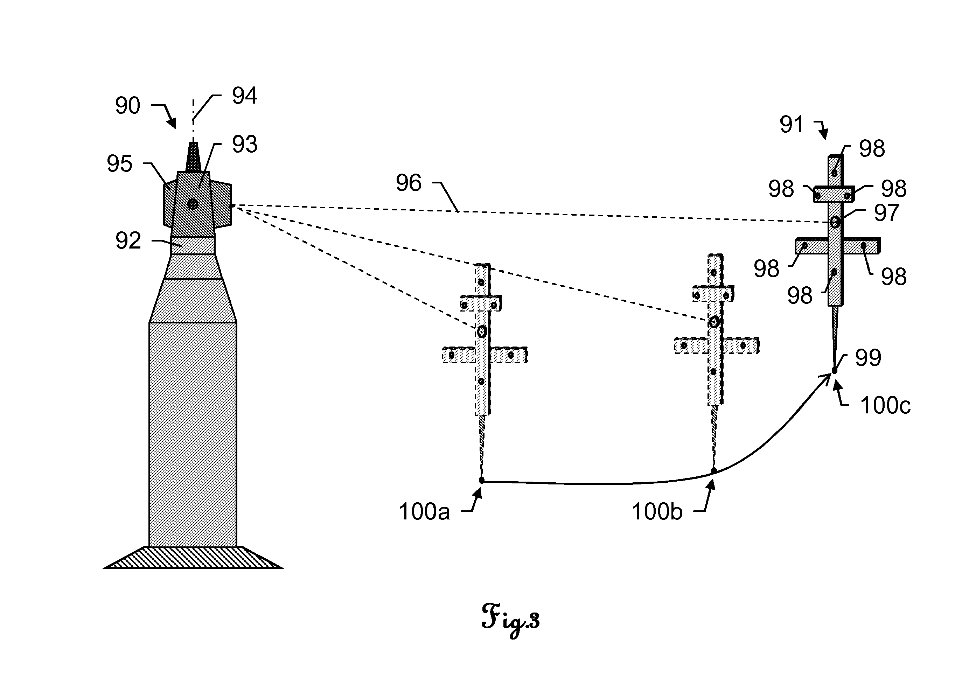

Figur 3 zeigt eine Ausführungsform für einen erfindungsgemässen Lasertracker 90 mit einem Messhilfsinstrument 91 mit Reflektor 97. Der Lasertracker 90 weist eine Basis 92 und eine Stütze 93 auf, wobei die Stütze 93 um eine durch die Basis 92 definierte Schwenkachse 94 (Stehachse) relativ zur Basis 92 schwenkbar bzw. rotierbar angeordnet ist. Zudem ist eine Anzieleinheit 95 derart an der Stütze 93 angeordnet, dass die Anzieleinheit 95 relativ zur Stütze 93 um eine Neigungsachse (Transitachse) schwenkbar ist. Durch eine so um zwei Achsen bereitgestellte Ausrichtungsmöglichkeit der Anzieleinheit 95 kann ein von dieser Einheit 95 emittierter Laserstrahl 96 (Messstrahl) flexibel ausgerichtet und damit Ziele angezielt werden. Die Schwenkachse 94 und die Neigungsachse sind hierbei im Wesentlichen orthogonal zueinander angeordnet, d.h. geringe Abweichungen von einer exakten Achsenorthogonalität können vorbestimmt und im System, beispielsweise zur Kompensation von dadurch entstehenden Messfehlern, hinterlegt sein.

In der gezeigten Anordnung ist der Laserstrahl 96 auf den Reflektor 97 gerichtet und wird an diesem zurück zum Lasertracker 90 retro-reflektiert. Mittels dieses Messlaserstrahls 96 kann eine Entfernung zum Reflektor 97, insbesondere mittels Laufzeitmessung, mittels des Phasenmessprinzips oder mittels des Fizeau-Prinzips, bestimmt werden. Der Lasertracker 90 verfügt hierzu über eine Distanzmesseinheit (Absolutdistanzmesseinheit) zur Bestimmung dieser Entfernung zwischen dem Tracker 90 und dem Reflektor 97 und über Winkelmesser, die eine Stellung der Anzieleinheit 95, mittels derer der Laserstrahl 96 definiert ausgerichtet und geführt werden kann, und somit eine Ausbreitungsrichtung des Laserstrahls 96 bestimmbar machen. Zudem verfügt der Tracker 90 über eine Interferometereinheit zur Bestimmung von Entfernungsänderungen zu einem Ziel mittels Interferometrie.

Ausserdem weist der Lasertracker 90, insbesondere die Anzieleinheit 95, eine Bilderfassungseinheit zum Zweck einer Positionsbestimmung einer Sensorbelichtung auf einem Sensor bzw. in einem erfassten Bild einen CMOS auf oder ist insbesondere als CCD- oder Pixelsensorarray-Kamera ausgebildet. Derartige Sensoren erlauben eine positionssensitive Detektion von erfasster Belichtung auf dem Detektor.

Weiters weist das Messhilfsinstrument 91 einen taktilen Sensor auf, dessen Kontaktpunkt 99 mit einem zu vermessenden Zielobjekt in Kontakt gebracht werden kann. Während dieser Kontakt zwischen dem Tastwerkzeug 91 und dem Zielobjekt besteht können eine Position des Kontaktpunktes 99 im Raum und damit die Koordinaten eines Punkts am Zielobjekt exakt bestimmt werden. Dieses Bestimmen erfolgt vermittels einer definierten relativen Positionierung des Kontaktpunkts 99 zum Reflektor 97 und zu am Messhilfsinstrument 91 angeordneten Markierungen 98, die beispielsweise als Leuchtdioden ausgebildet sein können. Alternativ können die Markierungen 98 auch derart ausgebildet sein, dass diese bei einem Beleuchten, z.B. mit Strahlung einer definierten Wellenlänge, die auftreffende Strahlung reflektieren (als Retroreflektoren ausgebildete Hilfspunkt-Markierungen 98), insbesondere eine bestimmte Leuchtcharakteristik zeigen, oder dass diese ein definiertes Muster oder Farbkodierung aufweisen. Aus der Lage bzw. Verteilung der Markierungen 98 in einem mit dem Sensor der Bilderfassungseinheit erfassten Bild kann somit eine Orientierung des Tastwerkzeugs 91 bestimmt werden.

In einer alternativen Ausführungsform (hier nicht gezeigt) weist ein erfindungsgemässer Lasertracker eine von der Bilderfassungseinheit separierte Strahlführungseinheit zur Emission des Laserstrahls auf, welcher ebenfalls auf den Reflektor 97 ausrichtbar ist. Sowohl der Laserstrahl als auch die Bilderfassungseinheit sind dabei jeweils um zwei Achsen motorisiert schwenkbar und können dadurch derart ausgerichtet werden, dass mittels der Bilderfassungseinheit das mit dem Laserstrahl angezielte Ziel 97 und die Markierungen 98 des Messhilfsinstruments 91 erfasst werden können.

Zur Ausrichtung des Laserstrahls 96 auf den Reflektor 97 sind am erfindungsgemässen Lasertrackern 90 jeweils Beleuchtungsmittel zur Beleuchtung des Reflektors 97 mit Strahlung einer bestimmten Wellenlänge, insbesondere im infraroten Wellenlängenbereich, vorgesehen und zusätzlich zumindest eine, vorzugsweise zwei, Kameras mit positionssensitiven Detektoren an jedem Tracker 90 angeordnet. Die an dem Reflektor 97 reflektierte und zum Lasertracker 90 rückgestrahlte Beleuchtungsstrahlung kann mittels der Kameras detektiert und mit jedem der positionssensitiven Detektoren eine Position des Reflektors 97 auf dem jeweiligen Detektor abgebildet werden. Somit können mit dem Lasertracker 90 zwei abgebildete Positionen des Reflektors bestimmt und in Abhängigkeit dieser abgebildete Zielpositionen das Ziel (Reflektor 97) aufgefunden - z.B. nach allgemein bekannten Prinzipien der Photogrammetrie - und die Anzieleinheit 95 derart ausgerichtet werden, dass das Ziel mit dem Messstrahl 96 angezielt wird.

Zudem kann auf Basis jeweils zweier mit dem Lasertrackers 90 erfasster Bilder eine Grobposition des Reflektors bestimmt werden. Diese Position kann nach allgemeinen geometrischen bzw. trigonometrischen Grundsätzen, beispielsweise nach geometrischen Konstruktionsprinzipien von Dreiecken oder mittels Sinus-und/oder Kosinussatz, bestimmt werden. Ausserdem können zu der Grobpositionsbestimmung allgemein bekannte Methoden der Photogrammetrie (Stereophotogrammetrie) eingesetzt werden. Hierfür sind zudem die relativen Positionen und insbesondere Ausrichtungen der Kameras am Tracker 90 zueinander bekannt.

Die Beleuchtungsmittel und die Kameras können in diesem Zusammenhang z.B. an der Bilderfassungseinheit, der Strahlführungseinheit, der Anzieleinheit 95, der Stütze 93 oder der Basis 92 in jeweils definierten Positionen angeordnet sein.

Mittels der Kenntnis der Positionierung der Kameras relativ zu einer Emissionsrichtung des Laserstrahls 96 kann der Laserstrahl 96 auf die ermittelte Grobposition des Reflektors 97 ausgerichtet und an diesen angekoppelt werden (lock-on). Dadurch kann trotz eines konstruktiv bedingten Versatzes der Lasermissionsrichtung zu den Erfassungsrichtungen der Kameras eine schnelle Ausrichtung des Strahls 96 erfolgen und eine durch die optischen Achsen der Kameras und den Laserstrahl 96 gegebene Parallaxe bestimmt werden. Im Speziellen kann der Laserstrahl 96 direkt, d.h. ohne einen iterativen Zwischenschritt, auf das Ziel 97 ausgerichtet werden.

Insbesondere kann - alternativ oder zusätzlich zur Bestimmung der Grobposition des Reflektors 97 - aus den auf den Detektoren (am Lasertracker 90) erfassten und abgebildeten Zielpositionen eine (Grob-) Entfernung zum Reflektor 97 bestimmt werden. Auch diese Bestimmung kann mittels allgemein gültiger geometrischer Grundsätze erfolgen, z.B. mittels des Höhensatzes für Dreiecke und/oder mittels Sinus- und/oder Kosinussatz.

Ausserdem kann ein erfindungsgemässes Ausrichten des Laserstrahls 96 auch bei Lasertrackern ohne Bilderfassungseinheit zur Orientierungsbestimmung (6-DoF Kamera) eines Messhilfsinstruments 91 Anwendung finden (3D-Lasertracker).

Ferner ist in Figur 3 ein Vorgehen für ein erfindungsgemässes Kalibrieren gezeigt. Hierzu werden Messungen zum Messhilfsinstrument 91 bei unterschiedlichen Positionen 100a-c des Messhilfsinstruments 91 durchgeführt. Für jede Position 100a-c ist eine Entfernung zum Tracker 90 durch eine Messung mit der Absolutdistanzmesseinheit bekannt, wobei die Absolutdistanzmesseinheit eine weitere Laserstrahlquelle (zusätzlich zur Diode für die Erzeugung der Messstrahlung für das Interferometer) aufweist. Die von der Laserdiode erzeugte Messstrahlung für das Interferometer des Lasertrackers 90 wird erfindungsgemäss durch eine sehr präzise und robuste Ansteuerelektronik für die Diode so stabil gehalten, dass die Wellenlänge der Messstrahlung - zumindest für den Kalibrierungsvorgang - hoch konstant vorliegt. Die dadurch vorgegebene Wellenlänge hängt dabei wesentlich von den Betriebsparametern der Laserdiode (z.B. Strom und Temperatur) und von der Ansteuerelektronik für die Diode ab.

In einer speziellen Ausführungsform kann die von der Laserdiode erzeugte Messstrahlung für das Interferometer des Lasertrackers 90 zusätzlich vermittels einer Wellenlängenstabilisierungseinheit (Absorptionszelle) auf eine Emissionswellenlänge stabilisiert werden und ist dadurch grob bekannt. So kann zwar eine Stabilisierung auf eine feste Wellenlänge erfolgen, jedoch muss für korrekte und zuverlässige Entfernungsmessungen (Messungen von Entfernungsänderungen mit dem Interferometer) diese Wellenlänge betragsmässig bekannt sein. Zur Bestimmung dieser Wellenlänge wird das erfindungsgemässe Kalibrieren ausgeführt.

Im Rahmen des erfindungsgemässen Kalibrierens wird hierzu an zumindest zwei der Positionen 100a-c, insbesondere fortlaufend an einer Vielzahl von Positionen zwischen Position 100a und Position 100c, mittels des Interferometers des Lasertrackers 90 eine Interferometerausgangsgrösse bestimmt. Dabei wird der Reflektor 97 trackend verfolgt, d.h. der Messstrahl ist während dieses Messvorgangs dauernd auf den Reflektor 97 gerichtet. Die Interferometerausgangsgrösse kann z.B. als eine Anzahl von Interferometerpulsen (Counts), die durch abwechselndes Erfassen von destruktiver und konstruktiver Interferenz gegeben sind und gezählt werden können, vorliegen (z.B. homodynes Interferometer) oder durch eine Phasendifferenz zwischen einem Referenzsignal und einem Messsignal (z.B. heterodynes Interferometer) bestimmt sein. Zudem wird jeweils eine absolute Distanz zum Reflektor 97 gemessen bzw. ist gegeben (mittels ADM). Die somit für jede Position gemessene Interferometerausgangsgrösse und die jeweilige Entfernung werden unter Berücksichtigung der jeweils grob bekannten Wellenlängen (für Absolutdistanzmesser und Interferometer) algorithmisch ausgewertet. Dadurch kann die vorliegende Wellenlänge für die Messstrahlung der Laserdiode sehr genau abgeschätzt werden. Insbesondere werden für diese Abschätzung atmosphärische Daten, wie z.B. Luftdruck, Luftfeuchte und Umgebungstemperatur, zusätzlich berücksichtigt. Auf Basis des Abschätzens der Emissionswellenlänge und mit Heranziehung eines Linienatlasses für das Absorptionsmedium der Wellenlängenstabilisierungseinheit - gemäss der speziellen Ausführungsform - kann ausserdem eine Orientierung in einem für jeweilige Wellenlängen eine Absorptionsstärke (für die Absorptionszelle) angebender Linienatlas bestimmt werden. Dadurch kann eine zur Stabilisierung verwendete Absorptionslinie des Absorptionsmediums identifiziert und damit die Emissionswellenlänge bestimmt werden.

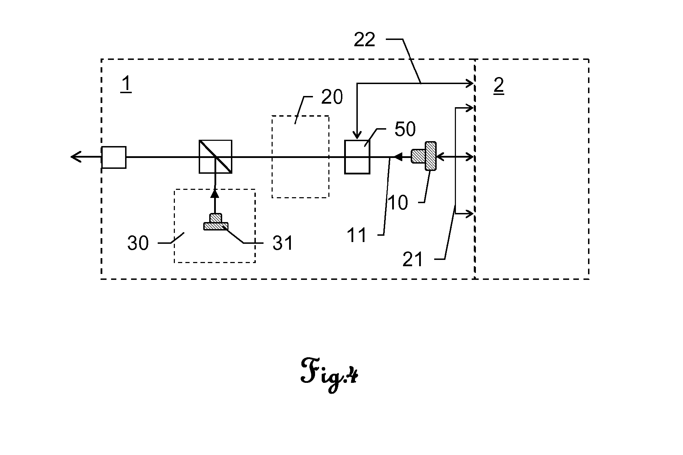

Das Messhilfsinstrument 91 kann generell von einem Benutzer geführt und positionell versetzt werden, wobei der Laser 96 fortlaufend auf den Reflektor 97 (Ziel) gerichtet bleibt. Dadurch können die unterschiedlichen Entfernungen zwischen Tracker 90 und Reflektor 97 bereitgestellt und Interferometerinformationen erzeugt werden. Figur 4 zeigt eine weitere Ausführungsform eines optischen Aufbaus 1 eines erfindungsgemässen Lasertrackers gemäss Figur 1 mit zusätzlich einer Absorptionszelle 50.

Mittels der Absorptionszelle 50 wird im Rahmen eines Stabilisierungsmodus eine Stabilisierung der Messstrahlung 11 auf ein Wellenlängennormal, d.h. hier auf eine Absorptionslinie (z.B. ca. 633nm), welche durch ein Absorptionsmedium der Absorptionszelle 50 definierte wird (z.B. Jod, I₂), realisiert. Insbesondere sind zur Stabilisierung unterschiedliche Stabilisierungsansätze heranziehbar, so z.B. Synchrondetektion ("synchronous detection": Modulation der optischen Frequenz um eine zentrale Absorptionslinie), "side of line" - Methode oder Stabilisation mittels des Zeeman-Effekts bei konstanter optischer Frequenz (mit magnetischer Modulation).

Im Rahmen der synchronen Detektion wird eine fortlaufende Wellenlängenänderung (und damit einer Änderung einer auf dieser Basis gemessenen Distanz) erzeugt, welche sich primär in einem erhöhten Distanzrauschen bemerkbar macht, wobei das Distanzrauschen jedoch durch eine erhöhte Messrate und anschliessende Integration oder synchronisierte Distanzmessung weitgehend eliminiert werden kann.

Die "side of line" - Methode basiert auf einer Stabilisation mittels Absorption bei einem Absorptionswert, welcher im Wesentlichen der maximalen Steigung einer korrespondierenden Absorptionslinie einer typischerweise als Gaszelle ausgebildeten Absorptionszelle 50 entspricht (z.B. Stabilisation bei ca. 40% Absorption). Da die Absorption einer Linie vom Gasdruck des Absorptionsmediums (z.B. Jodgas) und damit von der Temperatur der Absorptionszelle abhängt, muss hierbei die Temperatur der Absorptionszelle 50 sehr konstant gehalten werden.

Für die Stabilisierung werden die Betriebsparameter (z.B. Strom und/oder Temperatur) für die Laserdiode 10 vermittels der Steuerung- und Auswerteeinheit 2 derart geregelt, dass die Messstrahlung 11 mit einer im Wesentlichen konstanten Wellenlänge emittiert wird. Hierzu erfolgt eine fortlaufende Messung eines Absorptionsniveaus in der Absorptionszelle 50, wobei die dabei generierten Messinformationen mittels der Steuerung- und Auswerteeinheit 2 verarbeitet werden und korrespondierende Steuerungssignale für die Diode 10 erzeugt werden (angedeutet durch die Pfeile 21,22).

Für das Absorptionsmedium der zusätzlichen Absorptionszelle 50 ist zudem ein Linienatlas (Linienspektrum) gespeichert, der zu jeweiligen Wellenlängen eine jeweilige Absorptionsstärke für das Medium definiert. In einer speziellen Ausführung kann ausserdem eine aktuelle Absorptionsstärke vermittels eines Absorptionsdetektors, der der Zelle 50 zugeordnet sein kann, insbesondere fortlaufend, gemessen werden.

Eine aktuell gemessene Absorptionsstärke und die Kenntnis des Linienspektrums können zusätzlich bei der erfindungsgemässen Bestimmung der Interferometerwellenlänge der Messstrahlung 11 (gemäss Figur 1) berücksichtigt werden. Durch die Absorptionszelle 50 kann zum einen eine alternative oder zusätzliche Stabilisierung der Strahlung 11 erfolgen und bei Berücksichtigen der Referenz (Linienatlas) zum anderen eine gesteigerte Genauigkeit bei der Wellenlängenbestimmung erreicht werden.

Wird zu mehreren unterschiedlichen Entfernungen zum Objekt jeweils eine Interferometerausgangsgrösse bestimmt, so kann zudem eine Orientierung im Linienatlas unter Berücksichtigung der jeweils bei der Probemessung vorliegenden Entfernung zum Objekt, der bestimmten Interferometerausgangsgrössen und der Referenz (z.B. bekanntes Absorptionslinienspektrum für das verwendete Absorptionsmedium) bestimmt werden und daraus die Interferometerwellenlänge bestimmt werden.

Es versteht sich, dass diese dargestellten Figuren nur mögliche Ausführungsbeispiele schematisch darstellen. Die verschiedenen Ansätze können erfindungsgemäss ebenso miteinander sowie mit Kalibrier- und/oder Interferometrieverfahren, mit Verfahren zur Distanzbestimmung und mit gattungsgemässen Messgeräten, insbesondere Lasertrackern, des Stands der Technik kombiniert werden. Die erfindungsgemässen Aspekte können auch Anwendung finden im technischen Bereich von geodätischen Vermessungsgeräten wie z.B. Totalstationen und Tachymetern.

## Patentansprüche

1. Lasertracker (40,90) zur fortlaufenden Verfolgung eines reflektierenden Ziels (42,97) und zur Entfernungsbestimmung zu dem Ziel (42,97), mit
● einer eine Stehachse (94) definierenden Basis (92),
● einer Strahllenkeinheit (95) zur Emission einer Messstrahlung (11,41,96) und zum Empfang von zumindest einem Teil der am Ziel (42,97) reflektierten Messstrahlung (11,41,96), wobei die Strahllenkeinheit (95) um die Stehachse (94) und eine im Wesentlichen orthogonal zur Stehachse (94) stehende Neigungsachse relativ zur Basis (92) motorisiert schwenkbar ist,
● einem Interferometer (20) zur Bestimmung einer Entfernungsänderung zum Ziel (42,97) mittels Interferometrie mit einer als Interferometer-Laserstrahlquelle ausgebildeten abstimmbaren Laserdiode (10) zur derartigen Erzeugung der Messstrahlung (11,41,96) für das Interferometer (20), dass die Messstrahlung (11,41,96) kohärent longitudinal monomodig vorliegt,
● einer Absolutdistanzmesseinheit (30) zur Bestimmung eines Messdistanzwerts für eine Distanz (45,46) zum Ziel (42,97) und
● Winkelmessfunktionalität zur Bestimmung einer Ausrichtung der Strahllenkeinheit (95) relativ zur Basis (92),
**gekennzeichnet durch**
eine derart ausgebildete Steuerungs- und Auswerteeinheit (2), dass bei einer Ausführung eines Kalibriermodus ein Bestimmen einer
Interferometerwellenlänge der Messstrahlung (11,41,96) **dadurch** erfolgt, dass
● definierte Probemessungen unter einem Variieren der Distanz (45,46) zum Ziel (42,97) durchgeführt werden, wobei
□ die Probemessungen bei zumindest zwei unterschiedlichen Distanzen (45,46) zum Ziel (42,97) erfolgen,
□ die Messstrahlung (11,41,96) fortwährend auf das Ziel (42,97) ausgerichtet ist und unter Stabilhalten der Interferometerwellenlänge ein Bestimmen einer Interferometerausgangsgrösse mit dem Interferometer (20) für jede der zumindest zwei unterschiedlichen Distanzen (45,46) zum Ziel (42,97) erfolgt und
□ zumindest zwei Messdistanzwerte für die zumindest zwei unterschiedlichen Distanzen (45,46) zum Ziel (42,97) **durch** jeweils ein Distanzbestimmen mittels der Absolutdistanzmesseinheit (30) bereitgestellt werden und
● die Interferometerwellenlänge der Messstrahlung (11,41,96) mindestens anhand von den zumindest zwei Messdistanzwerten und den jeweils bestimmten Interferometerausgangsgrössen bestimmt wird.

2. Lasertracker (40,90) nach Anspruch 1,
**dadurch gekennzeichnet, dass**
die Interferometerwellenlänge der Messstrahlung (11,41,96) mittels Variation von zumindest einem Betriebsparameter variierbar ist und die Steuerungs- und Auswerteeinheit (2) derart ausgebildet ist, dass für die Laserdiode (10) der zumindest eine Betriebsparameter derart präzise einstellbar ist, dass durch das präzise Einstellen des zumindest einen Betriebsparameters die Interferometerwellenlänge so setzbar ist, dass diese grob bekannt ist.

3. Lasertracker (40,90) nach Anspruch 2,
**dadurch gekennzeichnet, dass**
bei Ausführung des Kalibriermodus das Bestimmen der Interferometerwellenlänge der Messstrahlung (11,41,96) zusätzlich in Abhängigkeit von der grob bekannten Interferometerwellenlänge erfolgt.

4. Lasertracker (40,90) nach Anspruch 2 oder 3,
**dadurch gekennzeichnet, dass**
die Steuerungs- und Auswerteeinheit (2) derart ausgebildet ist, dass bei einem In-Betrieb-Nehmen des Lasertrackers (40,90) der zumindest eine Betriebsparameter für die Laserdiode (10) derart gesetzt wird, dass ein vorheriger Betriebszustand für die Laserdiode (10) im Wesentlichen reproduziert wird, insbesondere ein letzter vorheriger Betriebszustand im Wesentlichen reproduziert wird.

5. Lasertracker (40,90) nach einem der Ansprüche 2 bis 4, **dadurch gekennzeichnet, dass**
eine variierbare Temperatur der Laserdiode (10) den zumindest einen Betriebsparameter verkörpert und/oder ein an der Laserdiode (10) anliegende variierbarer elektrischer Strom den zumindest einen Betriebsparameter verkörpert.

6. Lasertracker (40,90) nach einem der Ansprüche 2 bis 5, **dadurch gekennzeichnet, dass**
die Steuerungs- und Auswerteeinheit (2) derart ausgebildet ist, dass während einer Ausführung eines Messmodus ein Regeln der Interferometerwellenlänge vermittels des zumindest einen Betriebsparameters derart erfolgt, dass die Interferometerwellenlänge stabil bleibt.

7. Lasertracker (40,90) nach Anspruch 6,
**dadurch gekennzeichnet, dass**
gesteuert durch die Steuerungs- und Auswerteeinheit (2) während der Ausführung des Messmodus der Kalibriermodus fortlaufend ausgeführt wird, insbesondere wobei die im Rahmen des Kalibriermodus bestimmte Interferometerwellenlänge der Messstrahlung (11,41,96) zur Ausführung des Messmodus gespeichert wird.

8. Lasertracker (40,90) nach einem der Ansprüche 1 bis 7, **dadurch gekennzeichnet, dass**
die Laserdiode (10) derart ausgebildet ist, dass die Interferometerwellenlänge mit einer Kohärenzlänge von mindestens 10m, vorzugsweise 50m, erzeugbar ist, und/oder
eine Interferometer-Empfangseinheit des Interferometers (20) und eine Empfängereinheit der Absolutdistanzmesseinheit (30) unterschiedlich sind.

9. Lasertracker (40,90) nach einem der Ansprüche 1 bis 8, **dadurch gekennzeichnet, dass**
der Lasertracker (40,90) aufweist
● ein innerhalb eines Wellenlängenbereichs eine Vielzahl von bekannten Absorptionslinien definierendes Absorptionsmedium,
● einen Speicher mit einem innerhalb des Wellenlängenbereichs für jeweilige Absorptionswellenlängen jeweils eine Absorptionsstärke angebenden gespeicherten Linienatlas für das Absorptionsmedium und
● einen Detektor zur Bestimmung der Absorptionsstärke zur Stabilisierung der Interferometerwellenlänge in Abhängigkeit von einer jeweils aktuell bestimmten Absorptionsstärke.

10. Lasertracker (40,90) nach Anspruch 9,
**dadurch gekennzeichnet, dass**
bei Ausführung des Kalibriermodus ein Ermitteln einer Orientierung im Linienatlas basierend auf den bereitgestellten Messdistanzwerten, auf den Interferometerausgangsgrössen, auf der Vielzahl von bekannten Absorptionslinien und auf der bestimmten Absorptionsstärke erfolgt, insbesondere wobei die Interferometerwellenlänge in Abhängigkeit von der ermittelten Orientierung bestimmt wird.

11. Lasertracker (40,90) nach Anspruch 9 oder 10,
**dadurch gekennzeichnet, dass**
der Lasertracker (40,90) eine ein Absorptionsmedium aufweisende Absorptionszelle (50) aufweist, insbesondere wobei Jodgas das Absorptionsmedium bildet und die Interferometerwellenlänge zwischen 500nm und 650nm liegt, insbesondere zwischen 630nm und 635nm.

12. Kalibrierverfahren für und mit einem Lasertracker (40,90) mit
● einem Interferometer (20) zum Bestimmen einer Entfernungsänderung zu einem Ziel (42,97) mittels Interferometrie mit einer als Interferometer-Laserstrahlquelle ausgebildeten abstimmbaren Laserdiode (10) zum derartigen Erzeugen einer Messstrahlung (11,41,96) für das Interferometer (20), dass die Messstrahlung (11,41,96) kohärent longitudinal monomodig vorliegt, und
● einer Absolutdistanzmesseinheit (30) zur Bestimmung eines Messdistanzwerts für eine Distanz (45,46) zum Ziel (42,97),
**dadurch gekennzeichnet, dass**
ein Bestimmen einer Interferometerwellenlänge der Messstrahlung (11,41,96) dadurch erfolgt, dass
● definierte Probemessungen unter einem Variieren der Distanz (45,46) zum Ziel (42,97) durchgeführt werden, wobei
□ die Probemessungen bei zumindest zwei unterschiedlichen Distanzen (45,46) zum Ziel (42,97) erfolgen,
□ die Messstrahlung (11,41,96) fortwährend auf das Ziel (42,97) ausgerichtet ist und unter Stabilhalten der Interferometerwellenlänge ein Bestimmen einer Interferometerausgangsgrösse mit dem Interferometer (20) für jede der zumindest zwei unterschiedlichen Distanzen (45,46) zum Ziel (42,97) erfolgt und
□ zumindest zwei Messdistanzwerte für die zumindest zwei unterschiedlichen Distanzen (45,46) zum Ziel (42,97) durch jeweils ein Distanzbestimmen mittels der Absolutdistanzmesseinheit (30) bereitgestellt werden und
● die Interferometerwellenlänge der Messstrahlung (11,41,96) mindestens anhand von den zumindest zwei Messdistanzwerten und den jeweils bestimmten Interferometerausgangsgrössen bestimmt wird.

13. Kalibrierverfahren nach Anspruch 12,
**dadurch gekennzeichnet, dass**
ein Ermitteln einer Orientierung in einem für jeweilige Absorptionswellenlängen jeweils eine Absorptionsstärke angebenden Linienatlas in Abhängigkeit von den bereitgestellten Messdistanzwerten, von den Interferometerausgangsgrössen und von einer gemessenen Absorptionsstärke erfolgt, insbesondere wobei die Interferometerwellenlänge in Abhängigkeit von der ermittelten Orientierung bestimmt wird.

14. Kalibrierverfahren nach Anspruch 12 oder 13,
**dadurch gekennzeichnet, dass**
das Variieren der Distanz (45,46) zum Ziel (42,97) durch ein manuelles Versetzen des Ziels (42,97) durch einen Benutzer erfolgt.

15. Computerprogrammprodukt, das auf einem maschinenlesbaren Träger gespeichert ist,
● zur Steuerung des Durchführens von Probemessungen, und
● zur Ausführung des Bestimmens der Interferometerwellenlänge
eines Kalibrierverfahrens nach einem der Ansprüche 12 bis 14, insbesondere wenn das Computerprogrammprodukt auf einer Steuerungs- und Auswerteeinheit (2) eines Lasertrackers (40,90) nach einem der Ansprüche 1 bis 11 ausgeführt wird.
